# EUROPÄISCHE PATENTANMELDUNG

(11) **EP 4 675 717 A1**
(43) Veröffentlichungstag der Anmeldung: **07.01.2026**
(21) Anmeldenummer: 25182344.9
(22) Anmeldetag: 12.06.2025
(51) Int. Cl.: H01M 8/04119, H01M 8/0662

(54) **BRENNSTOFFZELLENABGASANLAGE, BRENNSTOFFZELLENSYSTEM UND VERFAHREN ZUM VERRINGERN DES WASSERGEHALTS IN BRENNSTOFFZELLENABGAS**

(30) Priorität: 05.07.2024 DE 102024119112
(71) Anmelder: Purem GmbH, 66539 Neunkirchen (DE)
(72) Erfinder: Spieth, Arnulf, Hochdorf (DE); Kurpejovic, Enver, Kirchheim unter Teck (DE)
(74) Vertreter: Ruttensperger Lachnit Trossin Gomoll

(57) **Zusammenfassung**

Eine Brennstoffzellenabgasanlage (20) für ein Brennstoffzellensystem (10), insbesondere in einem Fahrzeug, umfasst eine Mischanordnung (24) zur Aufnahme von aus wenigstens einer Brennstoffzelle (12) eines Brennstoffzellensystems (10) abgegebenem Brennstoffzellenabgas (B) und zur Aufnahme eines Mischgases (L) und zur Erzeugung eines Gemisches (G) aus Brennstoffzellenabgas (B) und Mischgas (L) sowie eine Wasser-Abscheideanordnung (50) im Bereich der Mischanordnung (24) oder/und stromabwärts der Mischanordnung (24) zum Abscheiden von aus dem Gemisch (G) auskondensiertem Wasser (W) und zur Abgabe des Gemisches (G).

## Beschreibung

Die vorliegende Erfindung betrifft eine Brennstoffzellenabgasanlage, ein eine derartige Brennstoffzellenabgasanlage enthaltendes Brennstoffzellensystem und ein Verfahren zum Verringern des Wassergehalts in dem von einer Brennstoffzelle eines Brennstoffzellensystems abgegebenen Brennstoffzellenabgas.

Bei der Erzeugung elektrischer Energie in einem beispielsweise mit einer oder mehreren PEM-Brennstoffzellen aufgebauten Brennstoffzellensystem entsteht insbesondere im Kathodenbereich Wasser. Dieses wird im Allgemeinen als Wasserdampf in dem den Kathodenbereich verlassenden Kathodenabgas, welches im Wesentlichen das auch zur Umgebung abzugebende Brennstoffzellenabgas bereitstellt, mitgeführt und über eine Brennstoffzellenabgasanlage zur Umgebung abgegeben. Vor allem bei vergleichsweise niedriger Umgebungstemperatur entsteht bei der Abgabe von stark mit Wasserdampf angereichertem Brennstoffzellenabgas in die Umgebungsluft aufgrund der spontanen Absenkung der Temperatur des Brennstoffzellenabgases beim Kontakt mit der Umgebungstemperatur durch auskondensierendes Wasser Nebel. Dieser kann die Sicht im Umfeld eines mit einem derartigen Brennstoffzellensystem ausgestatteten Fahrzeugs beeinträchtigen und kann auch zur Eisbildung auf dem Boden im Bereich eines mit einem derartigen Brennstoffzellensystem ausgestatteten Fahrzeugs führen.

Es ist die Aufgabe der vorliegenden Erfindung, eine Brennstoffzellenabgasanlage, ein damit aufgebautes Brennstoffzellensystem sowie ein Verfahren zum Verringern des Wassergehalts in Brennstoffzellenabgas bereitzustellen, mit welchen bei baulich einfacher Ausgestaltung die Abgabe von zu einer starken Nebelbildung führendem Brennstoffzellenabgas in die Umgebung vermieden wird.

Gemäß einem ersten Aspekt der vorliegenden Erfindung wird diese Aufgabe gelöst durch ein Brennstoffzellenabgasanlage für ein Brennstoffzellensystem, insbesondere in einem Fahrzeug, umfassend:
- eine Mischanordnung zur Aufnahme von aus wenigstens einer Brennstoffzelle eines Brennstoffzellensystems abgegebenem Brennstoffzellenabgas und zur Aufnahme eines Mischgases und zur Erzeugung eines Gemisches aus Brennstoffzellenabgas und Mischgas,
- eine Wasser-Abscheideanordnung im Bereich der Mischanordnung oder/und stromabwärts der Mischanordnung zum Abscheiden von aus dem Gemisch auskondensiertem Wasser und zur Abgabe des Gemisches.

Durch das Einleiten der thermisch im Wesentlichen nicht behandelten, im Allgemeinen also vergleichsweise kalten Umgebungsluft in das Brennstoffzellenabgas, also das Zusammenführen dieser beiden Gasströme, kann dafür gesorgt werden, dass bereits in der Brennstoffzellenabgasanlage im Bereich der Wasser-Abscheideanordnung ein größerer Anteil des im Brennstoffzellenabgas enthaltenen Wasserdampfs auskondensiert. Dies hat zur Folge, dass aufgrund des deutlich geringeren Wassergehalts in dem die Brennstoffzellenabgasanlage verlassenden Brennstoffzellenabgas auch bei vergleichsweise niedriger Umgebungstemperatur eine Nebelbildung im Wesentlichen nicht auftreten wird.

Zur Erzeugung und weiteren Bearbeitung des Gemisches kann vorgesehen sein,
- dass die Mischanordnung einen ersten Mischanordnung-Eintrittsbereich zur Aufnahme von Brennstoffzellenabgas in der Mischanordnung umfasst,
- dass die Mischanordnung einen zweiten Mischanordnung-Eintrittsbereich zur Aufnahme von Mischgas in der Mischanordnung umfasst,
- dass die Mischanordnung ein Mischvolumen zum Mischen des Brennstoffzellenabgases mit dem Mischgas und zum Erzeugen des Gemisches umfasst,
- dass die Mischanordnung einen Mischanordnung-Austrittsbereich zur Abgabe des Gemisches umfasst.

Um eine definierte Menge des Mischgases in das Brennstoffzellenabgas einleiten zu können, d. h., mit dem Brennstoffzellenabgas durchmischen zu können, kann eine Mischgas-Zuführanordnung zum Zuführen von Mischgas zu der Mischanordnung vorgesehen sein.

Bei einer aktiv arbeitenden Mischgas-Zuführanordnung kann die Mischgas-Zuführanordnung ein Gebläse oder einen Kompressor umfassen.

Bei einer baulich und auch hinsichtlich der erforderlichen Ansteuermaßnahmen besonders einfach aufgebauten Ausgestaltung kann eine passiv arbeitende Mischgas-Zuführanordnung eine Strahlpumpenanordnung umfassen, wobei das Brennstoffzellenabgas ein Treibmedium und das Mischgas ein Saugmedium bildet.

Zum Bereitstellen dieser passiv arbeitenden Struktur der Mischgas-Zuführanordnung kann die Strahlpumpenanordnung einen stromaufwärtigen Leitungsabschnitt zur Einleitung des Brennstoffzellenabgases und einen stromabwärtigen Leitungsabschnitt umfassen, wobei der stromaufwärtige Leitungsabschnitt mit einem stromabwärtigen Endbereich in einen stromaufwärtigen Endbereich des stromabwärtigen Leitungsabschnitts eingreifend positioniert ist, wobei zwischen dem stromabwärtigen Endbereich des stromaufwärtigen Leitungsabschnitts und dem stromaufwärtigen Endbereich des stromabwärtigen Leitungsabschnitts ein vorzugsweise den stromabwärtigen Endbereich des stromaufwärtigen Leitungsabschnitts ringartig umgebender Eintrittsbereich für das Mischgas gebildet ist.

Um durch Beschleunigung der Gasströme die Durchmischung zu fördern, wird vorgeschlagen, dass der stromaufwärtige Leitungsabschnitt in seinem stromabwärtigen Endbereich sich in Strömungsrichtung verjüngend ausgebildet ist, oder/und dass der stromabwärtige Leitungsabschnitt in seinem stromaufwärtigen Endbereich sich verjüngend ausgebildet ist.

Wenn die Mischgas-Zuführanordnung zum Zuführen von Umgebungsluft als Mischgas zu der Mischanordnung ausgebildet ist, kann das Medium, in welches das wasserentreicherte Gemisch aus Brennstoffzellenabgas und Mischgas abzugeben ist, auch als Mischgas genutzt werden. Da die als Mischgas genutzte Umgebungsluft bei Einleitung in das Brennstoffzellenabgas im Wesentlichen die Temperatur aufweist, auf welche nach dem Abscheiden von Wasser das Gemisch gekühlt wird, wird eine die Nebelbildung beim Abgeben des Gemisches in die Umgebung effizient mindernde Abscheidung von Wasser in der Brennstoffzellenabgasanlage unterstützt.

Um das Brennstoffzellenabgas effizient mit dem Mischgas zu durchmischen, kann stromaufwärts der Einleitung des Mischgases in das Brennstoffzellenabgas oder/und stromabwärts der Einleitung des Mischgases in das Brennstoffzellenabgas ein Mischer angeordnet sein. Ein derartiger Mischer kann beispielsweise mit einer Mehrzahl von schaufelartigen Ablenkelementen ausgebildet sein, um Turbulenzen in der Strömung bzw. eine Drallströmung beispielsweise des Brennstoffzellenabgases zu erzeugen

Die Wasser-Abscheideanordnung kann ein Wasser-Aufnahmevolumen und einen Abscheideanordnung-Austrittsbereich zur Abgabe von Wasser aus dem Wasser-Aufnahmevolumen umfassen.

Gemäß einem weiteren Aspekt der vorliegenden Erfindung wird die eingangs angeführte Aufgabe gelöst durch ein Brennstoffzellensystem, insbesondere in einem Fahrzeug, umfassend
- wenigstens eine Brennstoffzelle mit einem mit Wasserstoff enthaltendem Anodengas zu speisenden Anodenbereich und einem mit Sauerstoff enthaltendem Kathodengas zu speisenden Kathodenbereich,
- eine erfindungsgemäß aufgebaute Brennstoffzellenabgasanlage, wobei die Mischanordnung zur Aufnahme von am Kathodenbereich der wenigstens einen Brennstoffzelle abgegebenem Brennstoffzellenabgas mit dem Kathodenbereich verbunden ist.

Gemäß einem weiteren Aspekt der vorliegenden Erfindung wird die eingangs angeführte Aufgabe gelöst durch ein Verfahren zum Verringern des Wassergehalts in in einem Brennstoffzellensystem erzeugtem Brennstoffzellenabgas, umfassend die Maßnahmen:
a) Einleiten eines Mischgases in das Brennstoffzellenabgas und Erzeugen eines Gemisches aus Brennstoffzellenabgas und Mischgas,
b) Abscheiden von Wasser aus dem Gemisch,
c) Abgeben des bei der Maßnahme b) wasserentreicherten Gemisches zur Umgebung.

Bei diesem Verfahren kann die Maßnahme a) das Zuführen des Brennstoffzellenabgases zu einem Mischvolumen einer Mischanordnung und das Zuführen des Mischgases zu dem Mischvolumen umfassen.

Zur effizienten Ableitung des auskondensierten Wassers kann die Maßnahme b) das Sammeln von aus dem Brennstoffzellenabgas auskondensiertem Wasser in einem Wasser-Aufnahmevolumen und das Abgeben des im Wasser-Aufnahmevolumen gesammelten Wassers umfassen.

Um bereits in der Brennstoffzellenabgasanlage die Temperatur des Brennstoffzellenabgases für ein effizientes Abscheiden von Wasser aus diesem ausreichend abzusenken, wird vorgeschlagen, dass bei der Maßnahme a) Umgebungsluft als Mischgas mit dem Brennstoffzellenabgas gemischt wird.

Die Umgebungsluft kann beispielsweise vermittels einer Mischgas-Zuführanordnung zugeführt werden.

Das erfindungsgemäße Verfahren wird vorteilhafterweise vermittels einer erfindungsgemäß aufgebauten Brennstoffzellenabgasanlage in einem diese enthaltenden, erfindungsgemäß aufgebauten Brennstoffzellensystem durchgeführt.

Die vorliegende Erfindung wird nachfolgend mit Bezug auf die beiliegenden Figuren detailliert beschrieben. Es zeigt:
- Fig. 1: in prinzipieller Darstellung ein Brennstoffzellensystem mit einer Brennstoffzellenabgasanlage,
- Fig. 2: eine Mischanordnung der Brennstoffzellenabgasanlage der Fig.1 mit aktiv arbeitender Mischgas-Zuführanordnung;
- Fig. 3: eine Mischanordnung der Brennstoffzellenabgasanlage der Fig. 1 mit passiv arbeitender Mischgas-Zuführanordnung.

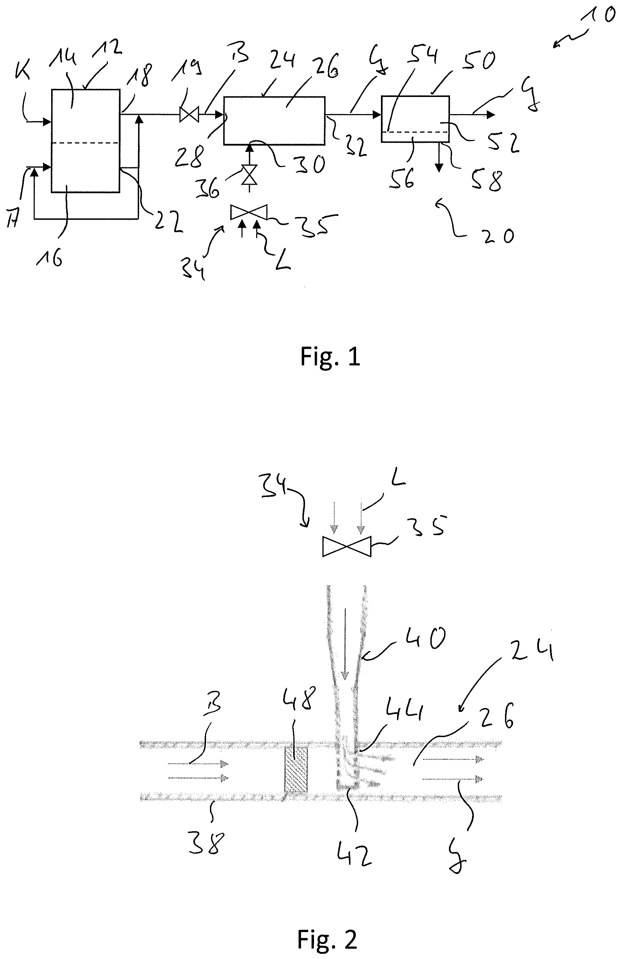

In Fig. 1 ist ein beispielsweise zur Erzeugung elektrischer Energie in einem Fahrzeug vorgesehenes Brennstoffzellensystem allgemein mit 10 bezeichnet. Das Brennstoffzellensystem 10 umfasst eine beispielsweise als Brennstoffzellenstapel oder dergleichen ausgebildete Brennstoffzelle 12 mit einem Kathodenbereich 14 und einem Anodenbereich 16. Dem Kathodenbereich 14 wird durch einen Kompressor oder dergleichen ein Sauersoff enthaltendes Kathodengas K, beispielsweise Luft, zugeführt. Dem Anodenbereich 16 wird ein Wasserstoff (H₂) enthaltendes Anodengas A zugeführt.

Ein im Brennstoffzellenprozess entstehendes Kathodenabgas tritt an einem Kathodenbereich-Austrittsbereich 18 aus dem Kathodenbereich 14 aus und strömt beispielsweise über ein wahlweise absperrbares Ventil 19 in Richtung zu einer allgemein mit 20 bezeichneten Brennstoffzellenabgasanlage. An einem Anodenbereich-Austrittsbereich 22 beispielsweise bei Durchführung eines Purge-Vorgangs austretendes Anodenabgas kann in den Arbeitsprozess rezykliert werden, um den darin enthaltenen Wasserstoff zur Erzeugung elektrischer Energie nutzen zu können, oder/ und kann zusammen mit dem Kathodenabgas als Brennstoffzellenabgas B der Brennstoffzellenabgasanlage 20 zugeführt werden.

Im Brennstoffzellenbetrieb entsteht insbesondere im Kathodenbereich 14 Wasser, welches im Allgemeinen als Wasserdampf in dem im Wesentlichen Sauerstoff und Stickstoff enthaltenden Kathodenabgas mitgeführt wird. Der Gehalt des Wassers bzw. Wasserdampfs in dem Kathodenabgas kann vergleichsweise groß sein und nahe einer vollständigen Sättigung, also einer relativen Feuchte von 100%, sein. Wird ein derartiges stark mit Wasser bzw. Wasserdampf angereichertes Kathodenabgas als Brennstoffzellenabgas B zur Umgebung ausgestoßen, besteht die Gefahr, dass insbesondere bei vergleichsweise niedriger Umgebungstemperatur beim Kontakt des Brennstoffzellenabgases B mit der kalten Umgebungsluft Wasser auskondensiert und somit Nebel entsteht.

Um bei der in Fig. 1 dargestellten Brennstoffzellenabgasanlage 20 bzw. dem diese aufweisenden Brennstoffzellensystem 10 die Gefahr einer Nebelbildung bei der Abgabe von Brennstoffzellenabgas B weitestgehend zu eliminieren, umfasst die Brennstoffzellenabgasanlage 20 eine Mischanordnung 24 mit einem beispielsweise in einem Gehäuse gebildeten Mischvolumen 26. Über einen ersten Mischanordnung-Eintrittsbereich 28 wird das von der Brennstoffzelle 12 abgegebene Brennstoffzellenabgas B in das Mischvolumen 26 eingeleitet. Über einen zweiten Mischanordnung-Eintrittsbereich 30 wird ein Mischgas L in das Mischvolumen 26 eingeleitet, um dieses mit dem Brennstoffzellenabgas B zu durchmischen und dabei ein die Mischanordnung 24 an einem Mischanordnung-Austrittsbereich 32 verlassendes Gemisch G aus Brennstoffzellenabgas B und Mischgas L zu erzeugen.

Zur Zufuhr des Mischgases L zu der Mischanordnung 24 ist eine allgemein mit 34 bezeichnete Mischgas-Zuführanordnung vorgesehen. In einer in den Fig. 1 und 2 dargestellten Ausgestaltungsform ist die Mischgas-Zuführanordnung 34 als aktiv arbeitendes System ausgebildet und umfasst beispielsweise ein Gebläse oder einen Kompressor 35, um Umgebungsluft aus der Umgebung der BrennstoffzellenAbgasanlage 20 bzw. eines diese enthaltenden Fahrzeugs als Mischgas L beispielsweise über ein wahlweise freigebbares bzw. absperrbares Ventil 36 in das Mischvolumen 26 einzuspeisen.

Eine mit einer derartigen aktiv arbeitenden Mischgas-Zuführanordnung 34 aufgebaute Mischanordnung 24 ist in Fig. 2 veranschaulicht. Die Mischanordnung 24 umfasst ein beispielsweise rohrartiges Gehäuse 38, in welches das Brennstoffzellenabgas B eingeleitet wird. Zur Zufuhr der Umgebungsluft als Mischgas L ist ein allgemein mit 40 bezeichneter Gas/Gas-Mischer vorgesehen, in welchen durch das Gebläse bzw. den Kompressor 35 der Mischgas-Zuführanordnung 34 das Mischgas L eingeleitet wird. Der Gas/Gas-Mischer 40 umfasst einen Gas-Abgabebereich 42, welcher sich innerhalb des rohrartigen Gehäuses 38 erstreckt und eine Vielzahl von Mischgas-Abgabeöffnungen 44 umfasst. Durch die Mischgas-Abgabeöffnungen 44 hindurch tritt das Mischgas L in ein in dem rohrartigen Gehäuse 38 stromabwärts des Ortes der Einleitung des Mischgases L in das Brennstoffzellenabgas B gebildetes Mischvolumen 26 ein, in welchem das Gemisch G aus Brennstoffzellenabgas B und Mischgas L entsteht.

Um die Durchmischung des Brennstoffzellenabgases B mit dem Mischgas L im Mischvolumen 26 zu unterstützen, ist in dem in Fig. 2 dargestellten Aufbau der Mischanordnung 24 stromaufwärts des Ortes der Einleitung des Mischgases L in das Brennstoffzellenabgas B ein Mischer 48 vorgesehen. Der Mischer 48 kann beispielsweise eine Mehrzahl von den Strom des Brennstoffzellenabgases B in Umfangsrichtung ablenkenden, schaufelartigen Ablenkelementen umfassen, so dass Turbulenzen bzw. eine Drallströmung im Brennstoffzellenabgas B erzeugt werden, in welche dann das Mischgas L eintritt.

Stromabwärts des Mischvolumens 26 der Mischanordnung 24 ist eine allgemein mit 50 bezeichnete Wasser-Abscheideanordnung vorgesehen. Die Wasser-Abscheideanordnung 50 umfasst ein von dem Gemisch G durchströmbares Volumen 52, von welchem beispielsweise durch eine mit Öffnungen versehene Wand 54 ein Wasser-Aufnahmevolumen 56 getrennt ist.

Das die Brennstoffzelle 12 verlassende Brennstoffzellenabgas B ist stark mit Wasser bzw. Wasserdampf angereichert und weist eine relative Feuchte von nahe 100% auf. Im Mischvolumen 26 wird dieses stark mit Wasser gesättigte und eine Temperatur von bis zu etwa 100°C aufweisende Brennstoffzellenabgas B mit der als Mischgas L genutzten Umgebungsluft gemischt, die, da sie vor Einleitung in das Mischvolumen 26 thermisch im Wesentlichen nicht behandelt wird, die Umgebungstemperatur aufweist. Insbesondere bei vergleichsweise niedrigen Umgebungstemperaturen führt die Durchmischung von mit Wasserdampf nahezu vollständig gesättigtem Brennstoffzellenabgas B mit der vergleichsweise kalten Umgebungstemperatur dazu, dass das so erzeugte Gemisch G eine deutlich niedrigere Temperatur aufweist, als das Brennstoffzellenabgas B. Dies führt dazu, dass die relative Feuchte auf 100% zunimmt. Da dieser Zustand nicht überschritten werden kann, kondensiert aus dem Gemisch G Wasser aus, das beispielsweise in Form von Wassertröpfchen im Gemisch G mitgeführt wird und im Bereich der Wasser-Abscheideanordnung 50 beispielsweise aufgrund einer dort eintretenden Strömungsberuhigung ausfällt und sich im Bereich des Wasser-Aufnahmevolumens 56 ansammelt. An einem Abscheideanordnung-Austrittsbereich 58 kann das im Wasser-Aufnahmevolumen 56 angesammelte Wasser entweder kontinuierlich oder intermittierend abgegeben und beispielsweise in den Brennstoffzellenprozess zurückgespeist oder zur Umgebung ausgestoßen werden.

Das wasserentreicherte Gemisch G verlässt dann die Wasser-Abscheideanordnung 50 und kann beispielsweise direkt zur Umgebung hin abgegeben werden. Da der Wassergehalt des die Brennstoffzellenabgasanlage 20 verlassenden Gemisches G im Vergleich zu dem Wassergehalt des Brennstoffzellenabgases B deutlich gesenkt ist, wird bei dem dann auftretenden Kontakt des Gemisches G mit der Umgebungsluft kein bzw. nahezu kein Wasser mehr auskondensieren, so dass eine Nebelbildung weitestgehend vermieden werden kann.

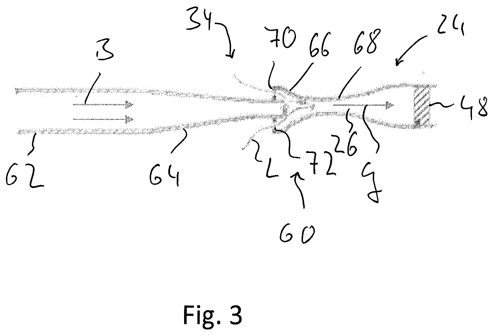

Eine alternative Ausgestaltungsart der Mischgas-Zuführanordnung 34 ist in Fig. 3 dargestellt. Die Mischgas-Zuführanordnung 34 der Fig. 3 ist ein passiv arbeitendes System und umfasst eine Strahlpumpenanordnung 60. Die Strahlpumpenanordnung 60 umfasst einen stromaufwärtigen Leitungsabschnitt 62, über welchen das Brennstoffzellenabgas B in die Mischanordnung 24 eingeleitet wird. Der stromaufwärtige Leitungsabschnitt 62 weist einen sich in Strömungsrichtung verjüngenden, also einen abnehmenden Strömungsquerschnitt aufweisenden, stromabwärtigen Endbereich 64 auf, der in einen stromaufwärtigen Endbereich 66 eines stromabwärtigen Leitungsabschnitts 68 eingreifend positioniert ist. Auch der stromaufwärtige Endbereich 66 des stromabwärtigen Leitungsabschnitts 68 ist in Strömungsrichtung sich verjüngend, also mit abnehmendem Strömungsquerschnitt, ausgebildet.

Der stromaufwärtige Endbereich 66 des stromabwärtigen Leitungsabschnitts 68 ist grundsätzlich offen, so dass den stromabwärtigen Endbereich 64 des stromaufwärtigen Leitungsabschnitts 62 umgebend ein beispielsweise ringartiger Eintrittsbereich 70 für das Mischgas L gebildet ist. Beispielsweise kann der ringartige Eintrittsbereich 70 eine Mehrzahl von in Umfangsrichtung um den stromabwärtigen Endbereich 64 aufeinander folgend angeordneten Mischgas-Eintrittsöffnungen 72 umfassen.

Bei dieser Strahlpumpenanordnung 60 stellt das Brennstoffzellenabgas B ein Treibmedium bereit, welches beim Einströmen in den stromaufwärtigen Endbereich 66 des stromabwärtigen Leitungsabschnitts 68 aufgrund seiner vergleichsweise hohen Strömungsgeschwindigkeit einen Unterdruck im Bereich des Eintrittsbereichs 70 erzeugt und dadurch die als Mischgas L genutzte Umgebungsluft ansaugt.

In dem in Strömungsrichtung auf den Eintrittsbereich 70 folgenden Mischvolumen 26 entsteht das Gemisch G aus Brennstoffzellenabgas B und Mischgas L. Um diese Durchmischung zu unterstützen, kann ein Turbulenzen bzw. eine Drallströmung erzeugender Mischer 48 vorgesehen sein. Während bei der in Fig. 2 dargestellten Ausgestaltungsform mit einer aktiv arbeitenden Mischgas-Zuführanordnung 34 der Mischer 48 vorteilhafterweise stromaufwärts des Gas/Gas-Mischers 40 angeordnet ist, um das Mischgas L in eine turbulente bzw. als Drallströmung ausgebildete Strömung des Brennstoffzellenabgases B einzuleiten, ist bei der in Fig. 3 dargestellten passiv arbeitenden Mischgas-Zuführanordnung 34 der Mischer 48 vorteilhafterweise stromabwärts der Einleitung des Mischgases L in das Brennstoffzellenabgas B vorgesehen, um dadurch eine Beeinträchtigung der Wirkung der Strahlpumpenanordnung 60 zu vermeiden.

Auch bei der in Fig. 3 dargestellten Mischanordnung 24 strömt das im Mischvolumen 26 gebildete Gemisch G dann zu einer Wasser-Abscheideanordnung, um bei der Durchmischung mit dem Mischgas L in der dabei auftretenden Abkühlung auskondensierendes Wasser abzuscheiden.

Es ist darauf hinzuweisen, dass die Brennstoffzellenabgasanlage auch in anderer Weise ausgebildet sein kann, als in Fig. 1 dargestellt. Beispielsweise können die Mischanordnung 24 und die Wasser-Abscheideanordnung 50 baulich zusammengefasst und in einem Gehäuse untergebracht sein. Beispielsweise kann das Mischvolumen 26 gleichzeitig auch das bzw. einen Teil des von dem Gemisch G durchströmbaren Volumens 52 der Wasser-Abscheideanordnung 50 bilden, um auch unmittelbar bei der Durchmischung von Brennstoffzellenabgas B und Mischgas L auskondensierendes und aus dem Gemisch G ausfallendes Wasser W bereits im Bereich des Mischvolumens 26 zu sammeln und abzuleiten. Auch kann die Brennstoffzellenabgasanlage weitere Systembereiche, wie z. B. einen Schalldämpfer oder dergleichen, beispielsweise stromabwärts der Mischanordnung bzw. der Wasser-Abscheideanordnung umfassen, so dass das Gemisch G von der Wasser-Abscheideanordnung 50 nicht direkt, sondern über derartige weitere Systembereiche zur Umgebung abgegeben wird.

## Patentansprüche

1. Brennstoffzellenabgasanlage für ein Brennstoffzellensystem, insbesondere in einem Fahrzeug, umfassend:
- eine Mischanordnung (24) zur Aufnahme von aus wenigstens einer Brennstoffzelle (12) eines Brennstoffzellensystems (10) abgegebenem Brennstoffzellenabgas (B) und zur Aufnahme eines Mischgases (L) und zur Erzeugung eines Gemisches (G) aus Brennstoffzellenabgas (B) und Mischgas (L),
- eine Wasser-Abscheideanordnung (50) im Bereich der Mischanordnung (24) oder/und stromabwärts der Mischanordnung (24) zum Abscheiden von aus dem Gemisch (G) auskondensiertem Wasser (W) und zur Abgabe des Gemisches (G).

2. Brennstoffzellenabgasanlage nach Anspruch 1,
**dadurch gekennzeichnet,**
- **dass** die Mischanordnung (24) einen ersten Mischanordnung-Eintrittsbereich (28) zur Aufnahme von Brennstoffzellenabgas (B) in der Mischanordnung (24) umfasst,
- **dass** die Mischanordnung (24) einen zweiten Mischanordnung-Eintrittsbereich (30) zur Aufnahme von Mischgas (L) in der Mischanordnung (24) umfasst,
- **dass** die Mischanordnung (24) ein Mischvolumen (26) zum Mischen des Brennstoffzellenabgases (B) mit dem Mischgas (L) und zum Erzeugen des Gemisches (G) umfasst,
- **dass** die Mischanordnung (24) einen Mischanordnung-Austrittsbereich (32) zur Abgabe des Gemisches (G) umfasst.

3. Brennstoffzellenabgasanlage nach Anspruch 1 oder 2,
**dadurch gekennzeichnet, dass** eine Mischgas-Zuführanordnung (34) zum Zuführen von Mischgas (L) zu der Mischanordnung (24) vorgesehen ist.

4. Brennstoffzellenabgasanlage nach Anspruch 3,
**dadurch gekennzeichnet, dass** die Mischgas-Zuführanordnung (34) ein Gebläse oder einen Kompressor umfasst.

5. Brennstoffzellenabgasanlage nach Anspruch 3,
**dadurch gekennzeichnet, dass** Mischgas-Zuführanordnung (34) eine Strahlpumpenanordnung (60) umfasst, wobei das Brennstoffzellenabgas (B) ein Treibmedium und das Mischgas (L) ein Saugmedium bildet.

6. Brennstoffzellenabgasanlage nach Anspruch 5,
**dadurch gekennzeichnet, dass** die Strahlpumpenanordnung (60) einen stromaufwärtigen Leitungsabschnitt (62) zur Einleitung des Brennstoffzellenabgases (B) und einen stromabwärtigen Leitungsabschnitt (68) umfasst, wobei der stromaufwärtige Leitungsabschnitt (62) mit einem stromabwärtigen Endbereich (64) in einen stromaufwärtigen Endbereich (66) des stromabwärtigen Leitungsabschnitts (68) eingreifend positioniert ist, wobei zwischen dem stromabwärtigen Endbereich (64) des stromaufwärtigen Leitungsabschnitts (62) und dem stromaufwärtigen Endbereich (66) des stromabwärtigen Leitungsabschnitts (68), ein vorzugsweise den stromabwärtigen Endbereich (64) des stromaufwärtigen Leitungsabschnitts (62) ringartig umgebender Eintrittsbereich (70) für das Mischgas (L) gebildet ist,
vorzugsweise wobei der stromaufwärtige Leitungsabschnitt (62) in seinem stromabwärtigen Endbereich (64) sich in Strömungsrichtung verjüngend ausgebildet ist, oder/und dass der stromabwärtige Leitungsabschnitt (68) in seinem stromaufwärtigen Endbereich (66) sich verjüngend ausgebildet ist.

7. Brennstoffzellenabgasanlage nach einem der Ansprüche 3-6,
**dadurch gekennzeichnet, dass** die Mischgas-Zuführanordnung (34) zum Zuführen von Umgebungsluft als Mischgas (L) zu der Mischanordnung ausgebildet ist.

8. Brennstoffzellenabgasanlage nach einem der Ansprüche 1-7,
**dadurch gekennzeichnet, dass** stromaufwärts der Einleitung des Mischgases (L) in das Brennstoffzellenabgas (B) oder/und stromabwärts der Einleitung des Mischgases (L) in das Brennstoffzellenabgas (B) ein Mischer (48) angeordnet ist.

9. Brennstoffzellenabgasanlage nach einem der Ansprüche 1-8,
**dadurch gekennzeichnet, dass** die Wasser-Abscheideanordnung (50) ein Wasser-Aufnahmevolumen (56) und einen Abscheideanordnung-Austrittsbereich (58) zur Abgabe von Wasser (W) aus dem Wasser-Aufnahmevolumen (56) umfasst.

10. Brennstoffzellensystem, insbesondere in einem Fahrzeug, umfassend
- wenigstens eine Brennstoffzelle (12) mit einem mit Wasserstoff enthaltendem Anodengas (A) zu speisenden Anodenbereich (16) und einem mit Sauerstoff enthaltendem Kathodengas (L) zu speisenden Kathodenbereich (14),
- eine Brennstoffzellenabgasanlage (20) nach einem der Ansprüche 1-9, wobei die Mischanordnung zur Aufnahme von am Kathodenbereich (14) der wenigstens einen Brennstoffzelle (12) abgegebenem Brennstoffzellenabgas (B) mit dem Kathodenbereich (14) verbunden ist.

11. Verfahren zum Verringern des Wassergehalts in in einem Brennstoffzellensystem erzeugtem Brennstoffzellenabgas (B), umfassend die Maßnahmen:
a) Einleiten eines Mischgases (L) in das Brennstoffzellenabgas (B) und Erzeugen eines Gemisches (G) aus Brennstoffzellenabgas (B) und Mischgas (L),
b) Abscheiden von Wasser (W) aus dem Gemisch (G),
c) Abgeben des bei der Maßnahme b) wasserentreicherten Gemisches (G) zur Umgebung.

12. Verfahren nach Anspruch 11,
**dadurch gekennzeichnet, dass** die Maßnahme a) das Zuführen des Brennstoffzellenabgases (B) zu einem Mischvolumen (26) einer Mischanordnung (24) und das Zuführen des Mischgases (L) zu dem Mischvolumen (26) umfasst.

13. Verfahren nach Anspruch 11 oder 12,
**dadurch gekennzeichnet, dass** die Maßnahme b) das Sammeln von aus dem Brennstoffzellenabgas (B) auskondensiertem Wasser (W) in einem Wasser-Aufnahmevolumen (56) und das Abgeben des im Wasser-Aufnahmevolumen (56) gesammelten Wassers (W) umfasst.

14. Verfahren nach einem der Ansprüche 12-14,
**dadurch gekennzeichnet, dass** bei der Maßnahme a) Umgebungsluft als Mischgas (L) mit dem Brennstoffzellenabgas (B) gemischt wird, vorzugsweise wobei die Umgebungsluft vermittels einer Mischgas-Zuführanordnung (34) zugeführt wird.

15. Verfahren nach einem der Ansprüche 11-14,
**dadurch gekennzeichnet, dass** das Verfahren vermittels einer Brennstoffzellenabgasanlage (20) nach einem der Ansprüche 1-9 in einem Brennstoffzellensystem (10) nach Anspruch 10 durchgeführt wird
